# EUROPÄISCHE PATENTSCHRIFT

(11) **EP 2 755 831 B1**
(45) Veröffentlichungstag und Bekanntmachung des Hinweises auf die Patenterteilung: **26.12.2018**
(21) Anmeldenummer: 12756749.3
(22) Anmeldetag: 12.09.2012
(51) Int. Cl.: B60C 23/04, B60C 23/06, G01C 21/26

(54) **VERFAHREN ZUM FILTERN VON DATEN IN EINEM REIFENDRUCKKON-TROLLSYSTEM EINES FAHRZEUGS**
METHOD FOR FILTERING DATA IN A TYRE PRESSURE MONITORING SYSTEM FOR A VEHICLE
PROCÉDÉ PERMETTANT DE FILTRER DES DONNÉES DANS UN SYSTÈME DE CONTRÔLE DE PRESSION DES PNEUS D'UN VÉHICULE

(30) Priorität: 12.09.2011 DE 102011082528
(43) Veröffentlichungstag der Anmeldung: 23.07.2014
(73) Patentinhaber: Continental Teves AG & Co. OHG, 60488 Frankfurt am Main (DE)
(72) Erfinder: GÜNTHNER, Stefan, 60489 Frankfurt (DE); RINK, Klaus, 63517 Rodenbach (DE); SCHMID, Bernhard, 61169 Friedberg (DE); STÄHLIN, Ulrich, 65760 Eschborn (DE)
(86) Internationale Anmeldenummer: PCT/EP2012/067855
(87) Internationale Veröffentlichungsnummer: WO 2013/037835

(56) Entgegenhaltungen:
- EP-A2- 1 752 317
- DE-A1- 4 331 845
- DE-A1-102008 049 047
- JP-A- 2008 168 674
- US-A1- 2004 246 115

## Beschreibung

Die Erfindung betrifft ein Verfahren zum Filtern von Daten in einem Reifendruckkontrollsystem eines Fahrzeugs, eine Steuervorrichtung zur Durchführung des Verfahrens und ein Fahrzeug mit der Steuervorrichtung.
Aus der DE 10 2009 036 493 A1 ist es bekannt, den Reifendruck eines Rades eines Fahrzeuges basierend auf einem Abgleich einer Fahrzeuglängsgeschwindigkeit mit den einzelnen Raddrehzahlgeschwindigkeiten zu bestimmen und damit den Reifendruck des Rades zu kontrollieren.

Weitere Reifendruckkontrollsysteme sind aus der EP1752317 A2, JP2008168674 und DE102008049047 A1 gekannt.

Es ist Aufgabe die Reifendruckkontrolle zu verbessern.
Die Aufgabe wird durch die Merkmale der unabhängigen Ansprüche gelöst. Bevorzugte Weiterbildungen sind Gegenstand der abhängigen Ansprüche.
Gemäß einem Aspekt der Erfindung umfasst ein Verfahren zum Filtern von Daten in einem Reifendruckkontrollsystem eines Fahrzeugs die Schritte:
- Erfassen einer vom Reifenhalbmesser abhängigen Größe eines Rades des Fahrzeuges,
- Filtern der Reifenhalbmesser abhängigen Größe basierend auf Fahrdynamikdaten und/oder einem globalen Navigationssatellitensystem-Signal, nachstehend GNSS-Signal genannt.

Die vom Reifenhalbmesser abhängige Größe kann der Reifenhalbmesser selbst, der Reifendruck oder jede beliebige andere Größe sein, basierend auf der der Reifenhalbmesser bestimmt werden kann. Ferner können unter die Fahrdynamikdaten alle Größen fallen, die die Bewegung des Fahrzeuges im Raum beschreiben. Diese Größen können Inertialsensordaten und damit eine Fahrzeuglängsdynamik als auch Raddrehzahlen sein.

Dem angegebenen Verfahren liegt die Überlegung zugrunde, dass zur Erfassung des Reifendruckes bei der Bestimmung des Reifenhalbmessers die Fahrzeuglängsgeschwindigkeit aus den Raddrehzahlsensoren selbst bestimmt werden kann. Ferner liegt dem angegebenen Verfahren die Überlegung zugrunde, dass die Fahrzeuglängsgeschwindigkeit auch aus anderen Fahrdynamikdaten, wie einem Inertialsensor bestimmt werden kann, der die Fahrzeuglängsdynamik misst. Somit liegt die Fahrzeuglängsgeschwindigkeit im Fahrzeug wenigstens zweimal vor.

Jedoch wird im Rahmen des angegebenen Verfahrens erkannt, dass weder bei der Bestimmung der Fahrzeuglängsgeschwindigkeit basierend auf den Raddrehzahlen noch bei der Bestimmung der Fahrzeuglängsgeschwindigkeit basierend auf der Fahrzeuglängsdynamik aus den Inertialsensordaten eine wahre Referenzgeschwindigkeit zur Verfügung steht, was die Qualität des auf diese Weise bestimmten Reifenhalbmessers spürbar senkt.

Es ist daher Idee des angegebenen Verfahrens, die Qualität des Reifenhalbmessers dadurch zu steigern, dass der Reifenhalbmesser aus zwei unterschiedlichen Messprinzipien heraus bestimmt und dann im Rahmen einer Filterung gegenübergestellt wird. Auf diese Weise lassen sich Unterschiede, wie Fehler und Rauschen erkennen mit denen der zukünftig gemessene Reifenhalbmesser korrigiert werden kann.

Unter das Filtern soll dabei jede beliebige analoge oder digitale Signalverarbeitungsmaßnahme fallen, mit der sich die beiden Datenarten gegenüberstellen lassen, um deren Informationsgehalt zu steigern. So kann dabei eine reine Mittelwertbildung ohne weitere Berücksichtigung anderer Faktoren wie Rauschen durchgeführt werden. Soll das Rauschen mit berücksichtigt werden, käme ein Zustandsbeobachter oder ein Kalman-Filter als Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt.

In einer Weiterbildung des angegebenen Verfahrens wird die vom Reifenhalbmesser abhängige Größe basierend auf einer Druckinformation erfasst, die von einem an dem Rad des Fahrzeuges befestigten Drucksensor erfasst wird. Dieser Weiterbildung liegt die Überlegung zugrunde, dass in einem Fahrzeug auch andere Sensorgrößen, wie beispielsweise Positionsdaten des Fahrzeuges in der oben genannten Weise gefiltert werden könnten. So könnte beispielsweise die Position des Fahrzeuges basierend auf einem noch zu beschreibenden Navigationssystemsignal erfasst und basierend auf einem Inertialsensor korrigiert werden, der die Dynamik des Fahrzeuges in die verschiedenen Raumrichtungen beschreibt. Auf diese Weise könnte die Position des Fahrzeuges fahrspurgenau angegeben werden. Je höher jedoch der Informationsgehalt der Daten aus dem Inertialsensor ist, desto besser können Fehler aus dem Navigationssystemsignal entfernt werden. Diese Erkenntnis zugrunde gelegt, schlägt die Weiterbildung im Rahmen dieses Beispiels vor, die den Informationsgehalt der Daten des Inertialsensors zunächst über den Drucksensor zu verbessern, da über beide Sensoren (Inertialsensor und Drucksensor) eine gemeinsame Vergleichsgröße, der Reifendruck berechnet werden kann. Die so in ihrem Informationsgehalt gesteigerten Daten könnten dann zur Steigerung des Informationsgehaltes des Navigationssystemsignals herangezogen werden.

In einer anderen Weiterbildung des angegebenen Verfahrens weist das Fahrzeug wenigstens zwei Räder auf und die vom Reifenhalbmesser abhängige Größe wird basierend auf Raddrehzahlen der zwei Räder und einer Fahrzeuglängsgeschwindigkeit berechnet. Dieser Weiterbildung liegt die Überlegung zugrunde, dass der Reifenhalbmesser und damit der Reifendruck grundlegend basierend auf einem einzigen Sensorsystem - den Raddrehzahlsensoren gemessen werden kann.

In einer Weiterbildung umfasst das angegebene Verfahren den Schritt:
- Erfassen der Fahrzeuglängsgeschwindigkeit basierend auf den Inertialsensordaten.

Dieser Weiterbildung liegt die Überlegung zugrunde, dass die Fahrzeuglängsgeschwindigkeit, wie bereits erwähnt, so zweimal vorliegen würde, so dass es zur Steigerung des Informationsgehaltes ausreichen würde, die Fahrzeuglängsgeschwindigkeit als vom Reifenhalbmesser abhängige Größe zu filtern. Auf diese Weise könnte die Filterung ohne weitere nachgelagerte Rechenschritte durchgeführt werden, was bei einer iterativen Filterung einen spürbaren Gewinn an Rechenleistung verzeichnen dürfte.

In einer zusätzlichen Weiterbildung umfasst das angegebene Verfahren den Schritt:
- Erfassen einer Position des Fahrzeuges aus dem GNSS-Signal, und
- Erfassen der Fahrzeuglängsgeschwindigkeit basierend auf der erfassten Position des Fahrzeuges.

Als GNSS-Signal kann beispielsweise ein Global Positioning System-Signal, kurz GPS-Signal, ein Γ 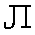 o 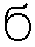 a 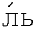 bHa 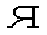 HaB 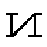 Γa 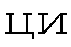 O 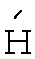 Ha 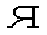 Cπy 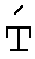 H 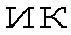 OBa 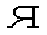 C 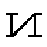 cTe 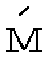 a Signal, kurz GLONASS-Signal oder ein Galileo-Signal verwendet werden. Damit stünde eine alternative oder zusätzliche Vergleichsgröße für die Fahrzeuglängsgeschwindigkeit zur Verfügung basierend auf der der Informationsgehalt des zu erfassenden Reifenhalbmessers verbessert werden könnte.

In einer noch anderen Weiterbildung umfasst das angegebene Verfahren den Schritt:
- Erfassen der Fahrzeuglängsgeschwindigkeit basierend auf einer Trägerfrequenz des GNSS-Signals.

Der Weiterbildung liegt die Überlegung zugrunde, dass durch eine Bewegung des Fahrzeuges beim Empfang des GNSS-Signals im Fahrzeug die Trägerfrequenz durch den Doppler-Effekt verfälscht wird. Diese Verfälschung der Trägerfrequenz kann als zusätzliche redundante Quelle für die Fahrzeuglängsgeschwindigkeit herangezogen werden.

Gemäß einem weiteren Aspekt der Erfindung ist eine Steuervorrichtung eingerichtet, ein angegebenes Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges mit einem Fusionssensor, und
Fig. 2 eine Prinzipdarstellung den Fusionssensor aus Fig. 1 zeigen.

In den Figuren werden gleiche technische Elemente mit gleichen Bezugszeichen versehen und nur einmal beschrieben.

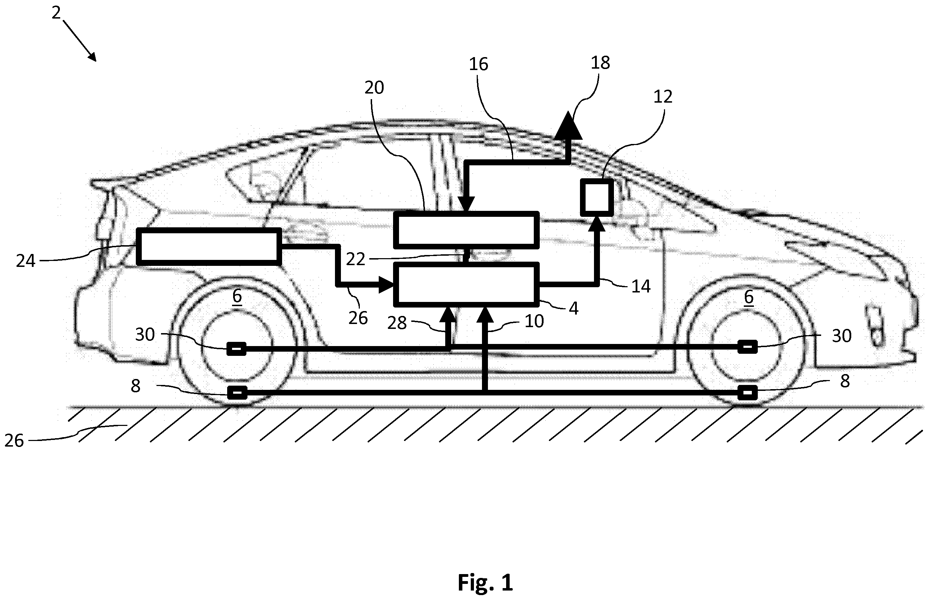

Es wird auf Fig. 1 Bezug genommen, die eine Prinzipdarstellung eines Fahrzeuges 2 mit einem Fusionssensor 4 zeigt.

In dem Fahrzeug 2 empfängt der Fusionssensor 4 in der vorliegenden Ausführungsform aus einem Reifendrucksensor 8 an jedem Rad 6 des Fahrzeuges 2 einen Reifendruck 10, basierend auf dem der Reifendruck 10 überwacht werden soll. Der Fusionssensor 4 empfängt diesen Reifendruck 10 und überwacht diesen in einer dem Fachmann bekannten Weise.

In der vorliegenden Ausführung umfasst das Fahrzeug 2 ein Navigationsgerät 12, das dem Fahrer eine Karte mit der Lage des Fahrzeuges 2 auf der Karte anzeigen kann. Dazu empfängt das Navigationsgerät 12 Positionsdaten 14 aus dem Fusionssensor 4.

Der Fusionssensor 4 erzeugt diese Positionsdaten 14 basierend auf einem GNSS-Signal 16, das über eine GNSS-Antenne 18 an einem GNSS-Empfänger 20 empfangen wird. Der GNSS-Empfänger 20 gibt basierend auf dem GNSS-Signal 16 GNSS-Rohdaten 22 aus, die dann in dem Fusionssensor 4 in die Positionsdaten 14 umgewandelt werden.

Zwar reichen die Rohdaten 22 aus, die Positionsdaten 14 zu erzeugen, der Fusionssensor 4 ist in einer noch zu beschreibenden Weise dazu ausgebildet, den Informationsgehalt der erzeugbaren Positionsdaten 14 zu steigern. Dies ist einerseits notwendig, da das GNSS-Signal 16 einen sehr hohen Signal/Rauschbandabstand aufweisen und so sehr ungenau sein kann. Andererseits ist das GNSS-Signal 16 nicht ständig verfügbar.

In der vorliegenden Ausführung weist das Fahrzeug 2 dazu einen Inertialsensor 24 auf, der Inertialsensordaten 26 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2 bzw. Untermengen dieser Größen. Diese Inertialsensordaten 26 werden in der vorliegenden Ausführung herangezogen, um den Informationsgehalt der Positionsdaten 22 zu steigern und die Position des Fahrzeuges 2 auf der Fahrbahn 26 zu präzisieren. Die so präzisierten Positionsdaten 14 können dann vom Navigationsgerät 12 selbst dann verwendet werden, wenn das GNSS-Signal 16 beispielsweise unter einem Tunnel überhaupt nicht verfügbar ist.

Zur weiteren Steigerung des Informationsgehaltes der Positionsdaten 14 werden in der vorliegenden Ausführung noch Raddrehzahlen 28 verwendet, die den Rädern 6 des Fahrzeuges 2 über Raddrehzahlsensoren 30 erfasst werden.

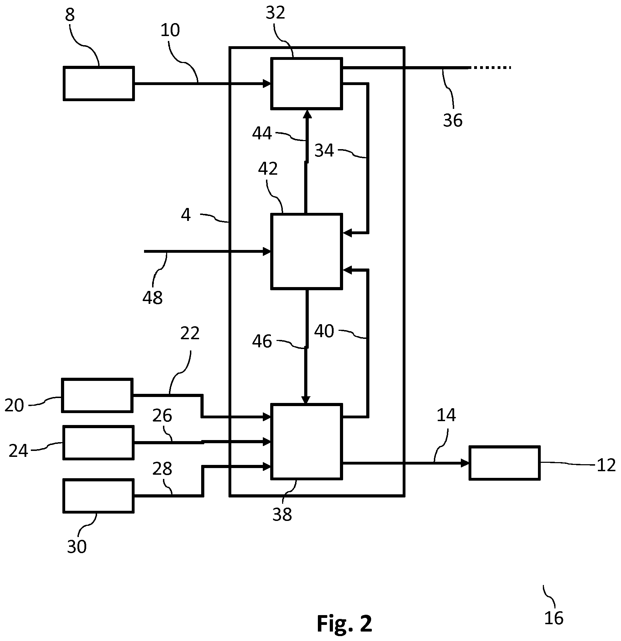

Es wird auf Fig. 2 Bezug genommen, die eine Prinzipdarstellung Fusionssensors 4 aus Fig. 1 zeigt.

In den Fusionssensor 4 gehen die in Fig. 1 bereits erwähnten Messdaten ein. Der Fusionssensor 4 soll einerseits Positionsdaten 14 ausgeben, andererseits soll der Fusionssensor 4 mit einem Reifendruckkontrollsystem 32 den Reifendruck 10 wenigstens eines Rades 6 des Fahrzeuges 2 anhand seines Reifenhalbmessers 34 überwachen. Bei einem zu niedrigen Reifendruck 10 und damit bei einem zu niedrigen Reifenhalbmesser 34 soll das Reifendruckkontrollsystem 32 ein entsprechendes Warnsignal 36 ausgeben.

Grundgedanke dazu ist es, die Information aus dem Reifendruckkontrollsystem 32 den GNSS-Rohdaten 22 aus dem GNSS-Empfänger 20, den Inertialsensordaten 26 aus dem Inertialsensor 24 und den Raddrehzahlen 28 aus den Raddrehzahlsensoren 30 gegenüberzustellen und einen Signal/Rauschbandabstand in dem Reifenhalbmesser 34 und damit in dem Reifendruck 10 aus dem Reifendrucksensor 6 zu erhöhen. In der vorliegenden Ausführung werden Reifenhalbmesser zur Steigerung des Signal/Rauschbandabstandes des gemessenen Reifendruckes 10 gegenübergestellt. Dies ist jedoch nur beispielhaft. Es lässt sich prinzipiell jede beliebige vom Reifendruck 10 abhängige Größe im Fusionssensor 4 gegenüberstellen, so der im Fahrzeug 2 eine redundante Größe erfasst wird. Eine derartige alternative redundante Größe wäre die Längsgeschwindigkeit des Fahrzeuges 2, die aus dem Reifendruck 10 über die bekannten Raddrehzahlen 28 abgeleitet werden könnte. Diese Ausführung wird jedoch der Kürze halber nicht weiter beschrieben.
Zur Gegenüberstellung wird für den Reifenhalbmesser 34 aus den GNSS-Rohdaten 22, den Inertialsensordaten 26 und den Raddrehzahlen 28 in einem Modell 38 ein Vergleichshalbmesser 40 berechnet. Das Modell 38 kann analog zum Fusionssensor 4 aufgebaut sein, und in ähnlicher Weise die GNSS-Rohdaten 22, den Inertialsensordaten 26 und den Raddrehzahlen 28 untereinander wieder gegeneinander filtern, um zur Berechnung des Vergleichshalbmessers 40 Eingangsdaten zur Verfügung zu haben, die einen höheren Informationsgehalt aufweisen. So kann das Modell 38 beispielsweise ein Fusionssensor sein, in dem die Positionsdaten 14 aus den GNSS-Rohdaten 22 basierend auf den Inertialsensordaten 26 gefiltert werden.
Die Gegenüberstellung selbst erfolgt in einem Filter 42, das zwar beliebig ausgebildet sein kann, ein Kalman-Filter löst die Gegenüberstellung am wirkungsvollsten mit einem vergleichsweise geringen Rechenressourcenanspruch. Daher soll das Filter 42 nachstehend vorzugsweise ein Kalman-Filter 42 sein.

Das Kalman-Filter 42 berechnet basierend auf dem Reifenhalbmesser 34 und dem Vergleichshalbmesser 40 einen Fehlerhaushalt 44 für Reifenhalbmesser 34 und einen Fehlerhaushalt 46 für den Vergleichshalbmesser 40. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Am Beispiel des GNSS-Signals 22 und der Positionsdaten 14 erkälrt, kann sich ein entsprechender Fehlerhaushalt aus Fehlern der Satellitenbahn, der Satellitenuhr, der restlichen Refraktionseffekte und aus Fehlern im GNSS-Empfänger 20 zusammensetzen. In den Fehlerhaushalt eines Signals können die Abweichung vom Erwartungswert des Signals und die Varianz des Signals eingehen.

Der Fehlerhaushalt 44 der des Reifenhalbmessers 34 und der Fehlerhaushalt 46 der Vergleichshalbmessers 40 werden dann entsprechend dem Reifenkontrollsystem 32 und dem Modell 38 zur Korrektur des Reifenhalbmessers 34 beziehungsweise des Vergleichshalbmessers 40 zugeführt. Das heißt, dass der Reifenhalbmesser 34 und der Vergleichshalbmesser 40 iterativ um ihre Fehler bereinigt werden.

In der vorliegenden Ausführung könnte dem Fusionssensor 4 analog zum Modell 38 ebenfalls ein weiterer Fusionssensor überlagert sein, der dann einen weiteren Fehlerhaushalt 48, beispielsweise des Positionssignals 14 oder des Warnsignals 36 ausgibt. Dieser weitere Fehlerhaushalt 48 könnte dem Kalman-Filter 42 zugeführt und in einer dem Fachmann bekannten Weise in diesem bei der Erzeugung der Fehlerhaushalte 44, 46 berücksichtigt werden.

## Patentansprüche

1. Verfahren zum Filtern von Daten in einem Reifendruckkontrollsystem eines Fahrzeugs (2), umfassend:
- Erfassen (10, 22, 26, 28) einer vom Reifenhalbmesser abhängigen Größe eines Rades (6) des Fahrzeuges (2),
- Filtern (42) der vom Reifenhalbmesser abhängigen Größe basierend auf Fahrdynamikdaten und/oder einem globalen Navigationssatellitensystem-Signal, nachstehend GNSS-Signal genannt, wobei
das Verfahren in einem Fusionssensor (4) durchgeführt wird, welcher einerseits Positionsdaten (14) ausgibt und andererseits mit einem Reifendruckkontrollsystem (32) den Reifendruck (10) wenigstens eines Rades (6) des Fahrzeuges (2) anhand seines Reifenhalbmessers (34) überwacht,
wobei
die Information aus dem Reifendruckkontrollsystem (32) GNSS-Rohdaten (22) aus einem GNSS-Empfänger (20), Inertialsensordaten (26) aus einem Inertialsensor(24) und Raddrehzahlen (28) aus Raddrehzahlsensoren (30) gegenübergestellt werden und einen Signal/Rauschbandabstand in dem Reifenhalbmesser (34) und damit in dem Reifendruck (10) aus einem Reifendrucksensor (8) zu erhöhen.

2. Verfahren nach Anspruch 1, wobei die vom Reifenhalbmesser abhängige Größe basierend auf einer Druckinformation (10) erfasst wird, die von einem an dem Rad des Fahrzeuges (2) befestigten Drucksensor erfasst wird.

3. Verfahren nach Anspruch 2, wobei die Druckinformation (10) über eine Raddrehzahl (28) des Rades (6) in eine Längsgeschwindigkeit des Fahrzeuges (2) umgerechnet wird.

4. Verfahren nach einem der vorstehenden Ansprüche, wobei das Fahrzeug (2) wenigstens zwei Räder (6) aufweist und die vom Reifenhalbmesser abhängige Größe basierend auf Raddrehzahlen (28) der zwei Räder (6) und einer Fahrzeuglängsgeschwindigkeit berechnet wird.

5. Verfahren nach Anspruch 4, umfassend:
- Erfassen der Fahrzeuglängsgeschwindigkeit basierend auf Inertialsensordaten.

6. Verfahren nach Anspruch 4 oder 5, umfassend:
- Erfassen einer Position des Fahrzeuges aus dem GNSS-Signal, und
- Erfassen der Fahrzeuglängsgeschwindigkeit basierend auf der erfassten Position des Fahrzeuges.

7. Verfahren nach Anspruch 5 oder 6, umfassend:
- Erfassen der Fahrzeuglängsgeschwindigkeit basierend auf einer Trägerfrequenz des GNSS-Signals.

8. Steuervorrichtung (4), die eingerichtet ist, ein Verfahren nach einem der vorstehenden Ansprüche durchzuführen.

9. Computerprogrammprodukt umfassend einen Programmcode, der auf einem computerlesbaren Datenträger gespeichert ist und der, wenn er auf einer Datenverarbeitungseinrichtung ausgeführt wird, ein Verfahren nach einem der Ansprüche 1 bis 7 durchführt

10. Fahrzeug (2) umfassend eine Steuervorrichtung (4) nach Anspruch 8.

## Claims

1. Method for filtering data in a tire pressure monitoring system for a vehicle (2), comprising:
- recording (10, 22, 26, 28) a variable that is dependent on the tire radius for a wheel (6) of the vehicle (2),
- filtering (42) the variable that is dependent on the tire radius on the basis of driving dynamics data and/or a global navigation satellite system signal, called GNSS signal below, wherein
the method is carried out in a fusion sensor (4) which outputs position data, on the one hand, and uses a tire pressure monitoring system (32) to monitor the tire pressure (10) of at least one wheel (6) of the vehicle (2) on the basis of its tire radius (34), on the other hand,
wherein
the information from the tire pressure monitoring system (32) is compared with GNSS raw data (22) from a GNSS receiver (20), inertial sensor data (26) from one inertial sensor (24) and wheel speeds (28) from wheel speed sensors (30) in order to increase a signal-to-noise ratio in the tire radius (34) and therefore in the tire pressure (10) from a tire pressure sensor (8).

2. Method according to Claim 1, wherein the variable that is dependent on the tire radius is recorded on the basis of an item of pressure information (10) recorded by a pressure sensor fastened to the wheel of the vehicle (2) .

3. Method according to Claim 2, wherein the pressure information (10) is converted into a longitudinal speed of the vehicle (2) using a wheel speed (28) of the wheel (6) .

4. Method according to one of the preceding claims, wherein the vehicle (2) has at least two wheels (6) and the variable that is dependent on the tire radius is calculated on the basis of wheel speeds (28) of the two wheels (6) and a vehicle longitudinal speed.

5. Method according to Claim 4, comprising:
- recording the vehicle longitudinal speed on the basis of inertial sensor data.

6. Method according to Claim 4 or 5, comprising:
- detecting a position of the vehicle from the GNSS signal, and
- recording the vehicle longitudinal speed on the basis of the detected position of the vehicle.

7. Method according to Claim 5 or 6, comprising:
- recording the vehicle longitudinal speed on the basis of a carrier frequency of the GNSS signal.

8. Control apparatus (4) which is set up to carry out a method according to one of the preceding claims.

9. Computer program product comprising a program code which is stored on a computer-readable data storage medium and carries out a method according to one of Claims 1 to 7 when executed on a data processing device.

10. Vehicle (2) comprising a control apparatus (4) according to Claim 8.

## Revendications

1. Procédé de filtrage de données dans un système de contrôle de pression de pneu d'un véhicule (2), comprenant :
- la détection (10, 22, 26, 28) d'une grandeur dépendante du rayon du pneu d'une roue (6) du véhicule (2),
- le filtrage (42) de la grandeur dépendante du rayon du pneu en se basant sur des données dynamiques de conduite et/ou un signal de système mondial de navigation par satellite, désigné ci-après par GNSS,
le procédé étant mis en oeuvre dans un capteur à fusion (4) qui délivre d'un côté des données de position (14) et, de l'autre côté, avec un système de contrôle de pression de pneu (32), surveille la pression de pneu (10) d'au moins une roue (6) du véhicule (2) à l'aide de son rayon de pneu (34),
l'information issue du système de contrôle de pression de pneu (32) étant confrontée à des données brutes GNSS (22) issues d'un récepteur GNSS (20), des données inertielles (26) issues d'un capteur inertiel (24) et des vitesses de rotation de roue (28) issues de capteurs de vitesse de rotation de roue (30) pour augmenter un écart signal/bruit dans le rayon de pneu (34) et ainsi dans la pression de pneu (10) issue d'un capteur de pression de pneu (8).

2. Procédé selon la revendication 1, la grandeur dépendante du rayon de pneu étant détectée en se basant sur une information de pression (10) qui est acquise par un capteur de pression fixé à la roue du véhicule (2).

3. Procédé selon la revendication 2, l'information de pression (10) étant convertie en une vitesse longitudinale du véhicule (2) par le biais d'une vitesse de rotation de roue (28) de la roue (6).

4. Procédé selon l'une des revendications précédentes, le véhicule (2) possédant au moins deux roues (6) et la grandeur dépendante du rayon de pneu étant calculée en se basant sur les vitesses de rotation de roue (28) des deux roues (6) et une vitesse longitudinale de véhicule.

5. Procédé selon la revendication 4, comprenant :
- l'acquisition de la vitesse longitudinale de véhicule en se basant sur des données de capteur inertiel.

6. Procédé selon la revendication 4 ou 5, comprenant :
- l'acquisition d'une position du véhicule à partir du signal GNSS, et
- l'acquisition de la vitesse longitudinale de véhicule en se basant sur la position acquise du véhicule.

7. Procédé selon la revendication 5 ou 6, comprenant :
- l'acquisition de la vitesse longitudinale de véhicule en se basant sur une fréquence porteuse du signal GNSS.

8. Dispositif de commande (4) qui est conçu pour mettre en oeuvre un procédé selon l'une des revendications précédentes.

9. Produit de programme informatique, comprenant un code de programme qui est enregistré sur un support de données lisible par ordinateur et qui, lorsqu'il est exécuté sur un appareil de traitement de données, met en oeuvre un procédé selon l'une des revendications 1 à 7.

10. Véhicule (2) comprenant un dispositif de commande (4) selon la revendication 8.
